# EUROPEAN PATENT APPLICATION

(11) **EP 4 538 681 A1**
(43) Date of publication of application: **16.04.2025**
(21) Application number: 24202625.0
(22) Date of filing: 25.09.2024
(51) Int. Cl.: G01N 21/39, G01N 21/03, G01N 21/3504

(54) **SYSTEMS AND METHODS FOR MEASURING GAS USING LASER SPECTROSCOPY**

(30) Priority: 29.09.2023 US 202318477727
(71) Applicant: ABB SCHWEIZ AG, 5400 Baden (CH)
(72) Inventor: LAPLANTE, Sylvio, 5400 Baden (CH); OWEN, Kyle, 5400 Baden (CH)
(74) Representative: Zimmermann & Partner Patentanwälte mbB

(57) **Abstract**

A laser spectroscopy assembly for gas measurement is provided. The assembly includes a gas cell. The cell body includes an input optic. The assembly also includes a light source configured to emit laser light into the gas cell. The assembly further includes an optical mask positioned in an optical path of the laser light and positioned between the gas cell and the light source. The optical mask includes a surface forming an angle with the input optic, the angle unequal to zero or 90°. The optical mask also includes an entry defined in the surface and sized to admit the laser light therethrough. The entry is positioned in the optical path. The optical mask is configured to reduce noise from etalons caused by parallel surfaces and/or quasi-parallel surfaces in the optical path.

## Description

### BACKGROUND

The field of the disclosure relates generally to systems and methods of measuring gases, and more particularly, to systems and methods of measuring composition of gases using laser spectroscopy.

Laser spectroscopy is a type of spectroscopy that uses lasers to measure the amount and composition of different substances in a gas sample, by analyzing how much light is absorbed by the sample at different wavelengths. Laser spectroscopy can be used for various purposes, such as environmental monitoring, where laser spectroscopy is used in measuring air pollution, greenhouse gases, and atmospheric trace gases. Laser spectroscopy may be used in chemical analysis, such as identifying and quantifying chemical compounds, impurities, contaminants, and isotopes.

Laser spectroscopy is a powerful tool in measuring gases. Known system and methods are disadvantaged in some aspects and improvements are desired.

### BRIEF DESCRIPTION

In one aspect, a laser spectroscopy assembly for gas measurement is provided. The assembly includes a gas cell including a cell body. The cell body includes an input optic. The assembly also includes a light source configured to emit laser light into the gas cell, wherein the laser light is in a wavelength range. The assembly further includes an optical mask positioned in an optical path of the laser light and positioned between the gas cell and the light source. The optical mask includes a surface forming an angle with the input optic, the angle unequal to zero or 90°. The optical mask also includes an entry defined in the surface and sized to admit the laser light therethrough. The entry is positioned in the optical path, and the optical mask is configured to reduce noise from etalons caused by parallel surfaces and/or quasi-parallel surfaces in the optical path.

In another aspect, an optical mask for a laser spectroscopy assembly is provided. The optical mask includes a surface being conical or pyramidal, the surface including an apex. The optical mask also includes an entry defined in the surface at the apex and sized to admit laser light therethrough. The optical mask is configured to reduce noise from etalons caused by parallel surfaces and/or quasi-parallel surfaces in an optical path of a laser spectroscopy assembly.

In one more aspect, a method of assembling a laser spectroscopy assembly for gas measurement is provided. The method includes providing a gas cell, wherein the gas cell includes a cell body. The cell body includes an input optic. The method also includes providing a light source configured to emit laser light in a wavelength range, and providing an optical mask. The optical mask includes a surface, and an entry defined in the surface and sized to admit the laser light therethrough. In addition, the method includes defining an optical path along which the laser light travels by positioning the light source and the gas cell such that the optical path starts from the light source and traverses through the gas cell. The method also includes positioning the optical mask between the gas cell and the light source, positioning the optical mask in the optical path by aligning the entry in the optical path, and facing the surface at an angle with the input optic. The angle is unequal to zero or 90°. The optical mask is configured to reduce noise from etalons caused by parallel surfaces and/or quasi-parallel surfaces in the optical path.

### DRAWINGS

These and other features, aspects, and advantages of the present disclosure will become better understood when the following detailed description is read with reference to the accompanying drawings in which like characters represent like parts throughout the drawings.

The patent or application file contains at least one drawing executed in color. Copies of this patent or patent application publication with color drawing(s) will be provided by the Office upon request and payment of the necessary fee.
FIG. 1 is a schematic diagram of a laser spectroscopy system.
FIG. 2A is a simplified diagram of optical components of the system shown in FIG. 1.
FIG. 2B shows formation of etalons.
FIG. 3A is a schematic partial diagram of an example laser spectroscopy assembly.
FIG. 3B is a front perspective view of an example optical mask assembled with a collimator.
FIG. 3C is a perspective side view of the assembly shown in FIG. 3B.
FIG. 3D is a diagram showing a light trajectory.
FIG. 4 is a schematic partial diagram of another example laser spectroscopy assembly.
FIG. 5 is a schematic partial diagram of one more example laser spectroscopy assembly.
FIG. 6A shows plots of variance in amplitudes of etalons.
FIG. 6B shows plots of variance in phases of etalons.
FIG. 7 is a flow chart of an example method of assembling a laser spectroscopy assembly.
FIG. 8 is a block diagram of an example computing device.
FIG. 9 is a block diagram of an example server computing device.

### DETAILED DESCRIPTION

The disclosure includes systems and methods of measuring gas composition in gas matrix using laser spectroscopy. Integrated cavity output spectroscopy (ICOS) is described herein as an example for illustration purposes only. Systems and methods described herein may be applied to laser spectroscopy in general. Method aspects will be in part apparent and in part explicitly discussed in the following description.

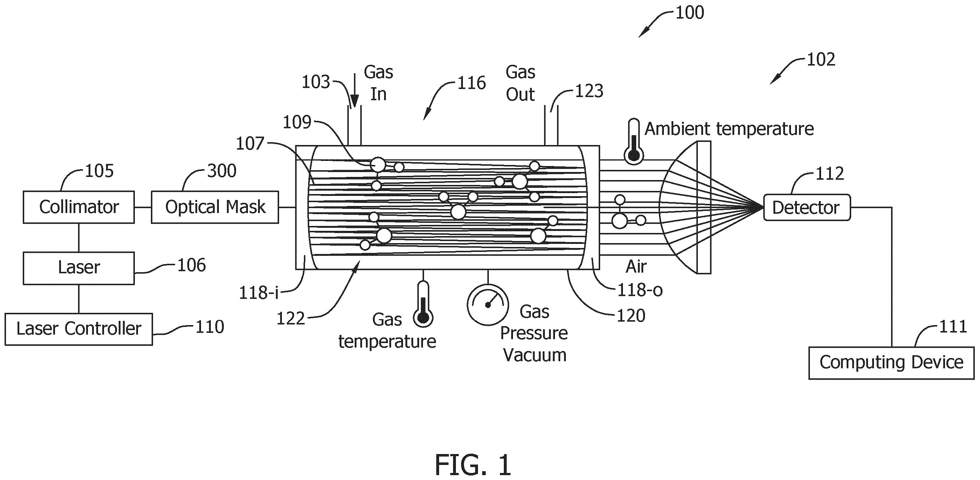

FIG. 1 is a schematic diagram of an example laser absorption spectrometry system 100 for measuring gas compositions. In the example embodiment, system 100 includes a laser spectroscopy assembly 102. Laser spectroscopy assembly 102 may be an ICOS assembly.

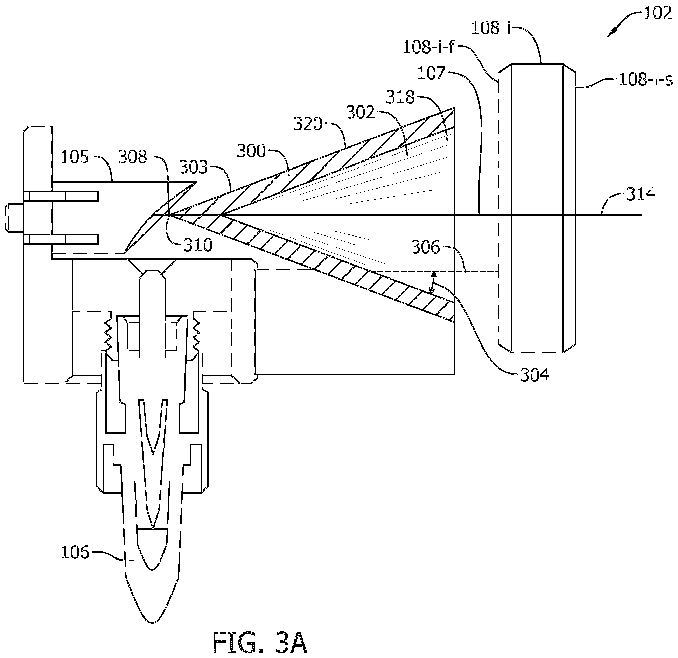

In the example embodiment, laser spectroscopy assembly 102 includes a light source 106. Example light sources 106 are lasers 106 such as diode lasers. Diode laser 106 may be a tunable near-infrared diode laser or laser that emits light in other wavelength ranges such as ultraviolet (UV), visible, or mid-infrared. Laser 106 may be tuned to emit laser light in a certain wavelength range. Laser spectroscopy assembly 102 further includes a collimator 105 for focusing and/or redirecting the laser light emitted by light source 106. Collimator 105 may be a lens collimator. Alternatively, collimator 105 may be a mirror collimator. Laser spectroscopy assembly 102 further includes a gas cell 116 and a detector 112. Gas cell 116 includes a cell body 120 defining an optical cavity 122. Gas cell 116 further includes an input optic 118-i and an output optic 118-o. In the depicted embodiment, input optic 118-i and output optic 118-o are mirrors, the main function of which is to reflect light. Input and output mirrors 118-i, 118-o are highly reflective, having reflectance approximately 99.995%. In some embodiments, input optic 118-i and output optic 118-o are windows, the main function of which is to transmit light therethrough. Laser spectroscopy assembly 102 further includes an optical mask 300 (also see FIGs. 3A-5 described later). Input and output optics 118 are positioned at two opposing ends of optical cavity 122.

In the example embodiment, laser spectroscopy assembly 102 further includes a gas inlet 103 sized to introduce gas into optical cavity 122 and a gas outlet 123 sized to remove the gas from optical cavity 122.

In the example embodiment, system 100 may further include a computing device 111 and a laser controller 110. Laser controller 110 and computing device 111 may be part of laser spectroscopy assembly 102, or may be separate components from laser spectroscopy assembly 102. Laser controller 110 is configured to control laser 106 of laser spectroscopy assembly 102. Signals detected by detector 112 of laser spectroscopy assembly 102 are received and processed by computing device 111.

In operation, to measure the content of gas, the gas is introduced into optical cavity 122 through gas inlet 103 and removed from optical cavity 122 through gas outlet 123. During measurement, laser light 107 is input toward a collimator 105 and travels through optical mask 300. Laser light 107 then travels into optical cavity 122 through input optic 118-i and exit from output optic 118-o while gas to be analyzed flows into optical cavity 122 through gas inlet 103 and exit from optical cavity 122 from gas outlet 123. Light 107 is reflected back and forth within optical cavity 122, travelling a relatively long effective optical path length and therefore increasing the interaction path length between light 107 and gas 109. As a result, the optical absorption of gas is increased to a detectable level and is used to quantify gas concentrations, even for gases at relatively low concentrations or weakly absorbing gas. Detector 112 measures the light exiting from cell body 120 and the measurements from detector 112 are used to measure gases. Different gases have different absorption spectra. Accordingly, the spectra of the signals from detector 112 are used to measure the content of different gases.

The absorption spectra of gases, however, are affected by etalons, which are caused by overlapping laser lights. Etalons may have sinusoidal waveforms. When laser light travels back and forth between parallel or quasi-parallel surfaces, the laser light and its reflection interfere with one another, causing etalons and creating sinewaves in the absorption spectra. As a result, an absorption peak and a spectrum of the gas are deformed by the etalons.

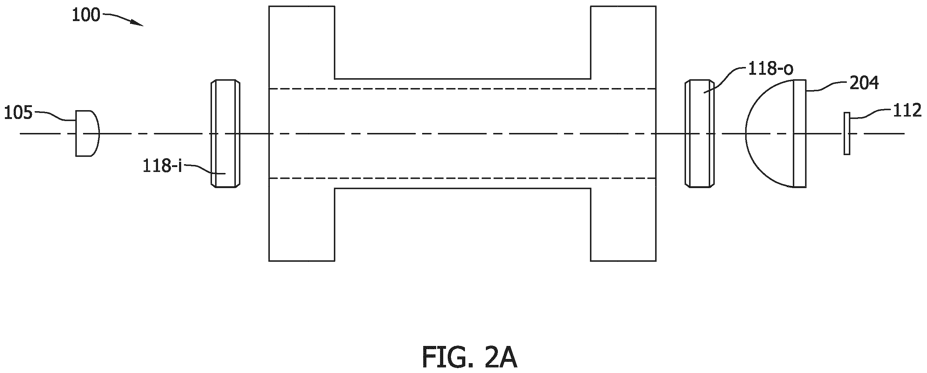

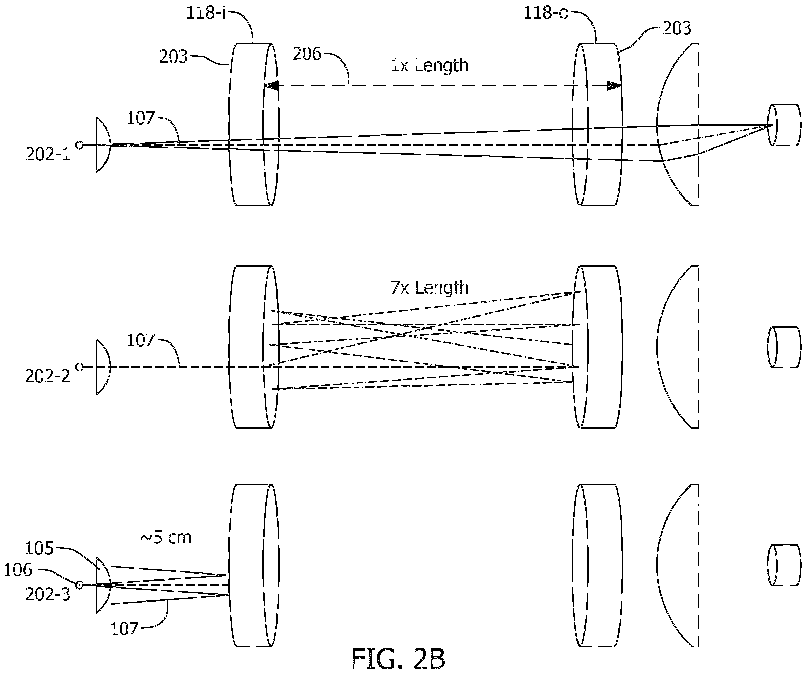

FIGs. 2A and 2B show the formation of etalons in further details. FIG. 2A is a simplified diagram of optical components of system 100. FIG. 2B shows three etalons 202-1, 202-2, 202-3, which are the major contribution to system noise. Optical components of system 100 include collimator 105, input optic 118-i, output optic 118-o, a collecting lens 204, and photodetector 112 (FIG. 2A). Etalon 202-1 may occur when light 107 travels one length (L) 206 of optical cavity 122. Cavity length 206 is the distance between inner side 203 of input optic 118-i and outer side 203 of output optic 118-o (FIG. 2B). Etalon 202-2 may occur after the light has travelled across output optic 118-o and reentered back as re-entrant. Etalon 202-2 occurs after light has travelled several times, e.g., seven times, of cavity length 206. Etalon 202-3 may occur when light is reflected back to collimator 105 and/or light source 106. Etalons 202-1, 202-2, 202-3 are disruptive in the measurements of gas absorption spectra. Although system 100 involves hundreds or thousands of reflections within optical cavity 122 for a single measurement, the first several reflections contribute disproportionally to self-interference noise. The most disruptive etalons are those associated with optical distances between optical surfaces that produce interfering sinewaves with a semi-period, or a half of the period, equivalent in dimension to be within the absorption bandwidth at half-height of the gases of interest, e.g., 202-3. Etalons 202-3 are more disruptive than other etalons 202-1 and 202-2 because etalon 202-3 affects absorption peaks of gases of interest more than other etalons, reducing measurement accuracy and precision.

In known laser spectroscopy systems, etalons are mitigated using piezo-electric actuators that are placed on input and/or output optics to modulate the cavity dimensions at a frequency vastly different from the laser scanning frequency. The known approach, however, is complicated and expensive. Further, because etalons change in phase and amplitude as temperature varies, known systems and methods would need to be designed, redesigned, or adjusted to take into consideration of the effects of temperature on etalons, increasing complexity and costs of known systems.

Systems and methods described herein overcome the above described problems in known systems and methods. An optical mask is positioned between the collimator and a cell body. The optical mask is configured to reduce noise from etalons caused by the laser light being reflected back and forth between parallel surfaces and/or quasi-parallel surface in the optical path, such as etalons 202-3. Etalons 202-3 are caused by the interference of light traveling back and forth between surfaces among input optic 118-i, collimator 105, and light source 106. The light reflected by the input optic 118-i is reflected away from input optic 118-i and/or is at least partially absorbed by the optical mask, thereby reducing etalons 202-3.

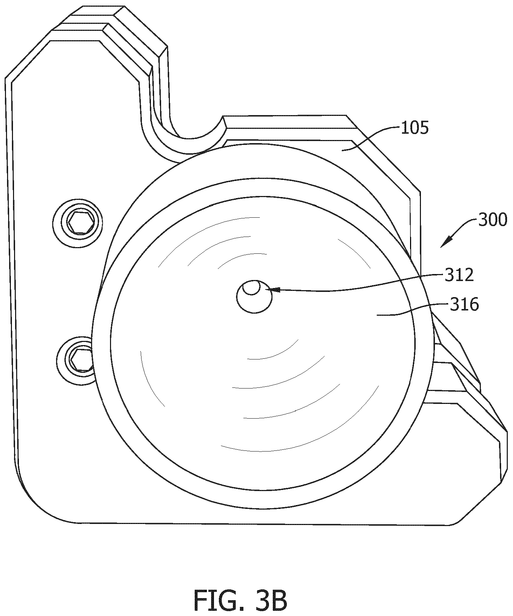

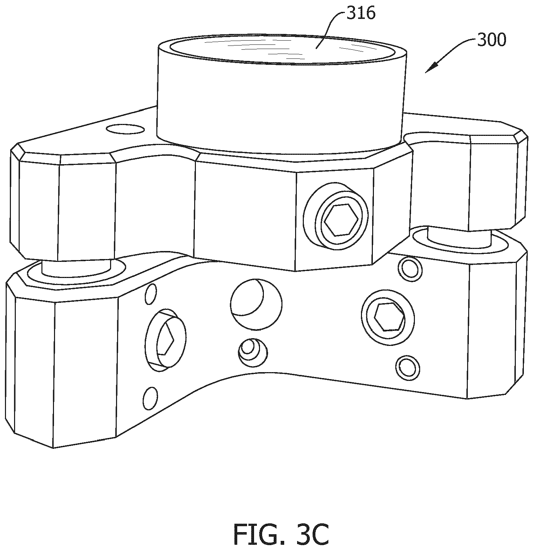

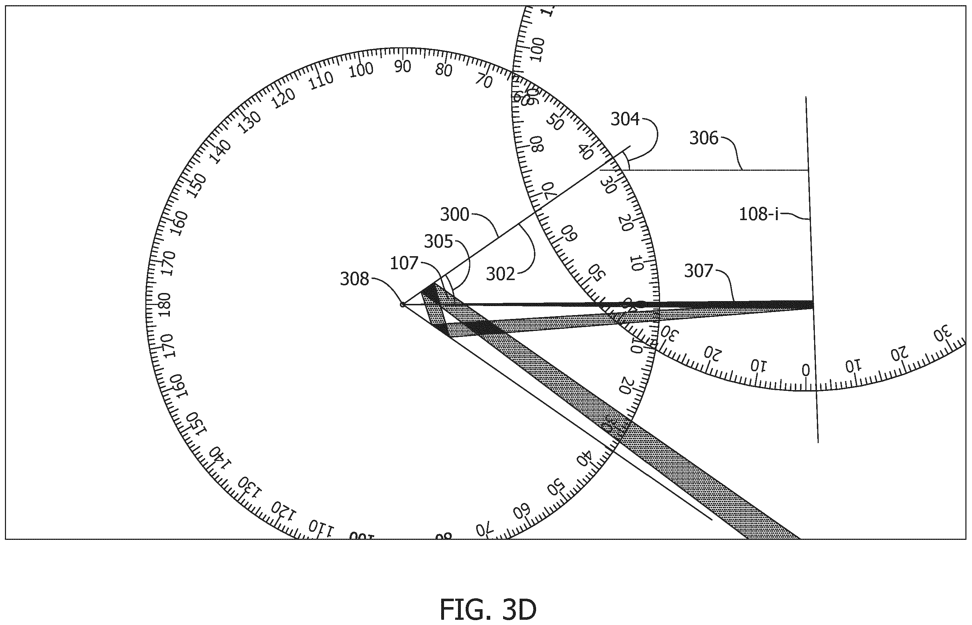

FIGs. 3A-3D show an example optical mask 300. FIG. 3A is a schematic partial diagram of a cross-sectional view of an example laser spectroscopy assembly 102 installed with optical mask 300. FIG. 3B is a front perspective view of optical mask 300 assembled with collimator 105. FIG. 3C is a side perspective view of the assembly shown in FIG. 3B. FIG. 3D shows an example light trajectory. In the example embodiment, optical mask 300 includes a surface 302 that forms an angle 304 with input optic 118-i. As used herein, input optic 118-i collectively refers to a first optic surface 118-i-f positioned at the exterior of gas cell 116 and a second optic surface 118-i-s positioned at the interior surface of gas cell 116. Angle 304 of surface 302 is defined as an angle of surface 302 relative to the normal 306 of input optic 118-i. Angle 304 is unequal to zero or 90°. In some embodiments, a multiplication of angle 304 is unequal to 90°. For example, for 30°, a multiplication of 30° by 3 is 90°. At such angles, multiplications of which are 90°, light 107 is reflected back to input optic 118-i after reflections by surface 302. Angle 304 may be selected to reduce the number of times that the laser light reflected by input optic 118-i and further reflected by surface 302 intersects with input optic 118-i. In some embodiments, angle 304 is selected such that laser light 107 reflected by input optic 118-i is reflected away by surface 302 and does not intersect input optic 118-i. In the depicted embodiment, an interior side 301 of surface 302 faces input optic 118-i while an exterior side 303 of surface 302 faces light source 106.

In the example embodiment, mask 300 includes an entry 308 defined in surface 302 and sized to admit light through. In the depicted embodiment, optical mask 300 is conical, where surface 302 forms into a cone having an apex 310. Surface 302 defines an aperture 312 as entry 308 (see FIG. 3B). Aperture 312 is positioned at apex 310. In some embodiments, aperture 312 is replaced with a window (not show) as entry 308. The window is transparent to light 107 such that almost all of light 107 passes through the window and travels toward input optic 118-i. Transparent material that forms the window may be pure or undoped glass. Entry 308 is positioned in an optical path 314 of light 107 and between collimator 105 and input optic 118-i such that light 107 emitted from collimator 105 passes through entry 308 and travels toward cell body 120.

In operation, light emitted from lasers 106 are collimated and directed by collimator 105 toward input optic 118-i. Light 107 then passes through entry 308 and reaches input optic 118-i. Because input optic 118-i is reflective, at least a portion of light 107 is reflected back by input optic 118-i (see FIG. 3D). The reflected light reaches surface 302. Because surface 302 is not parallel with input optic 118-i, light further reflected by surface 302 does not necessarily intersect input optic 118-i, and instead may be reflected away from input optic 118-i. In some embodiments, angle 304 may be selected such that light 107 reflected by input optic 118-i is reflected away from input optic 118-i by surface 302 and does not intersect input optic 118-i. In the example shown in FIG. 3D, angle 304 between surface 302 and input optic 118-i is 35° and light 107 further reflected by surface 302 does not intersect input optic 118-i. When surface 302 is conical, an angle 305 of surface 302 may be 35°. An angle of surface 302 having a plurality of faces is the angle between the faces and the axis of surface 302. For example, an angle of a conical surface is the angle between the axis 307 of the conical surface and a generatrix of the conical surface (see FIG. 3D). As a result, surface 302 reduces light from being repeatedly reflected back and forth between input optic 118-i and light source 106/collimator 105, thereby reducing etalons. In some embodiments, a multiplication of angle 305 of surface 302 is unequal to 90° such that light 107 is not reflected back to input optic 118-i by surface 302.

In the example embodiment, surface 302 further includes an absorbent coating 316 on a side facing input optic 118-i. Surface 302 includes a first side 318 and a second side 320 opposite first side 318. First side 318 faces input optic 118-i. Absorbent coating 316 is positioned on first side 318 such that at least part of light 107 reflected by input optic 118-i is absorbed by absorbent coating 316. Absorbent coating 316 has a relatively low reflectance, for example 50% or less, 10% or less, or 1% or less. Reflectance of a material indicates the percentage of light being reflected by the material. The smaller the reflectance of the material is, the less light is reflected by the material. Absorbent coating 316 may be selected based on the wavelength range of light 107 such that the reflectance of the absorbent coating 316 in the wavelength range is in a predetermined range. When surface 302 is included with absorbent coating 316, light reflected by input optic 118-i is absorbed by absorbent coating 316, thereby reducing light that travels toward input optic 118-i and be repeatedly reflected back and forth between input optic 118-i and light source 106/collimator 105. According, etalons are further reduced. Example materials of absorbent coating include plastic, nylon, paint, polyoxymethylene (POM), or a combination thereof. Absorbent coating 316 may be coupled with surface 302 via coating methods, or other methods such as using adhesives or molding like injection molding with surface 302.

In some embodiments, surface 302 is fabricated with a material having a relatively low reflectance as described above. Example materials include plastic, nylon, POM, or a combination thereof.

In operation, when light 107 is reflected by surface 302 multiple times, light is absorbed at each reflection by the material having a relatively low reflectance of surface 302 and/or absorbent coating 316, thereby significantly reducing the residual light and etalons. For example, if surface 302 reduces the light to 10% in one reflection, after three reflections, the intensity of the light is reduced to 0.1% (0.1³).

In some embodiments, surface 302 does not include absorbent coating 316 or is not fabricated with a material having a relatively low reflectance. To minimize etalons, angle 304 of surface 302 may be selected via computer simulation. For example, the trajectory of light is simulated as a function of angle 304. Angle 304 is adjusted. Angles that cause the light exiting from surface 302 not intersecting input optic 118-i are selected.

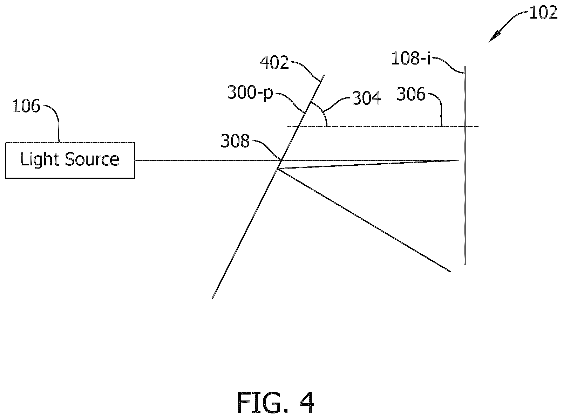

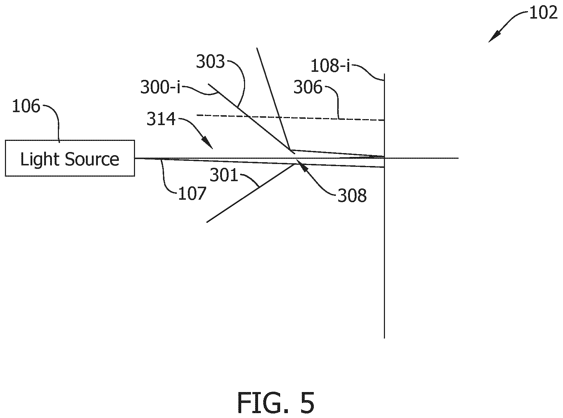

FIGs. 4 and 5 show other example embodiments of optical masks 300-p and 300-i. FIG. 4 is a schematic diagram a planar optical mask 300-p. In the example embodiment, surface 302 of optical mask 300-p includes a plane 402. Plane 402 has angle 304 with input optic 118-i that is not zero or 90°. Plane 402 may slant in a direction opposite the slanting direction as depicted, where the top portion of plane 402 is more proximate to light source 106 than the bottom portion of plane 402.

FIG. 5 is a schematic partial diagram of laser spectroscopy assembly 102 assembled with one more example optical mask 300-i. In the example embodiment, surface 302 of optical mask 300-i is inverted, where an interior side 301 of surface 302 faces light source 106 while an exterior side 303 of surface 302 faces input optic 118-i. Entry 308 is positioned farther away from light source 106, compared with optical mask 300 shown in FIGs. 3A-3D. Inverted mask 300-i is advantageous in reducing etalons because light 107 reflected from input optic 118-i is reflected away and is not recirculated between collimator 105/light source 106 and input optic 118-i. The size of entry 308 of optical mask 300-i is greater than that of optical mask 300 shown in FIGs. 3A-3D because light 107 diverges as light travels.

In some embodiments, optical mask 300 includes a plurality of surfaces 302 and each surface 302 is at a non-zero angle with one another. The plurality of surfaces 302 form a pyramidal shape. The number of surfaces 302 may be four, six, or any other numbers that enable optical mask 300 functions as described herein.

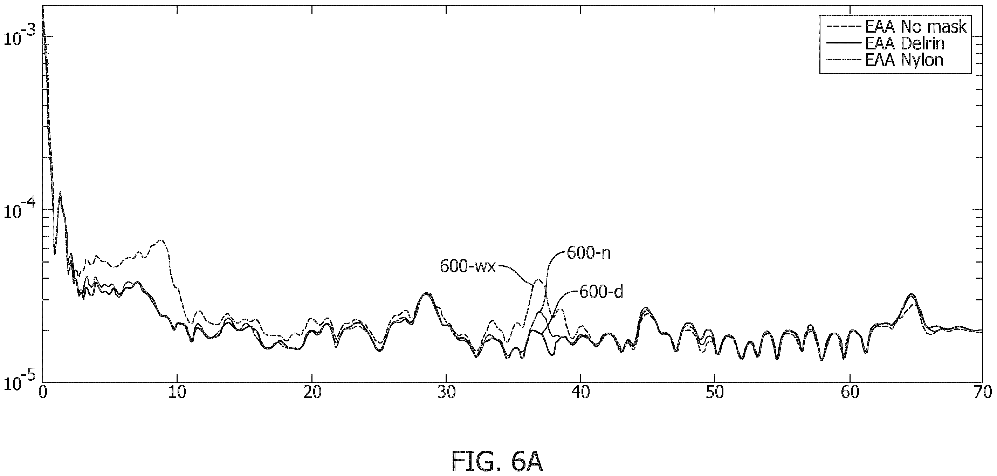

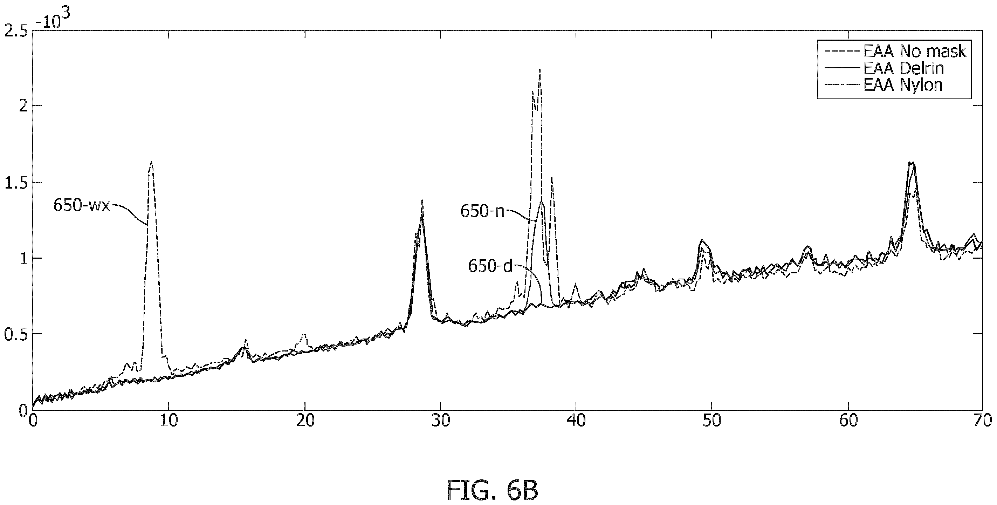

FIGs. 6A and 6B show that optical mask 300 significantly reduces etalons. FIG. 6A shows plots of variance in amplitudes of etalons when laser spectroscopy assembly 102 includes a nylon optical mask 300 (plot 600-n) or a POM optical mask 300 (plot 600-d), or laser spectroscopy assembly 102 does not include an optical mask 300 (plot 600-wx). Surface 302 of nylon optical mask 300 is fabricated from nylon, while surface 302 of POM optical mask 300 is fabricated from POM. FIG. 6B shows plots of variance in corresponding phases of etalons for a nylon optical mask or POM optical mask (plots 650-n and 650-d) and without an optical mask 300 (plot 650-wx). As shown, etalons are significantly reduced by optical mask 300. Plots 600 and 650 are generated from experimental data.

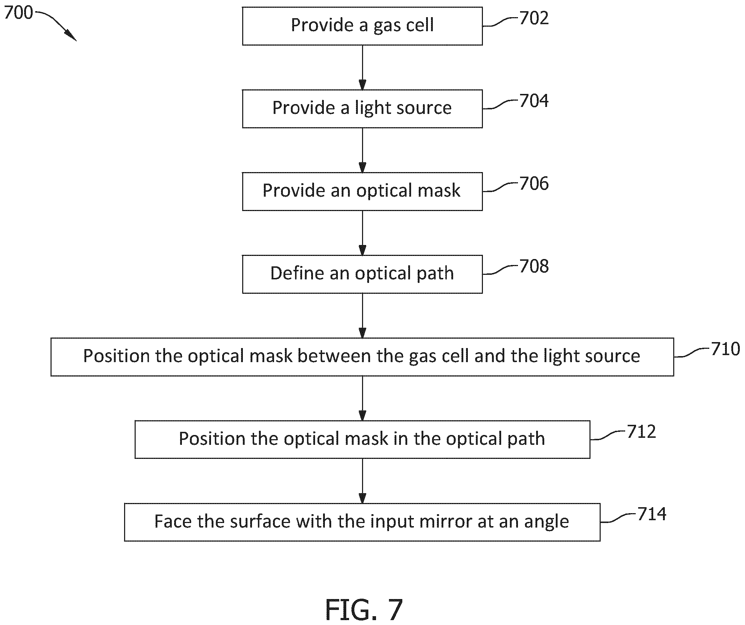

FIG. 7 is an example method 700 of assembling a laser spectroscopy assembly. In the example embodiment, method 700 includes providing 702 a gas cell. Method 700 also includes providing 704 a light source. Method 700 further includes providing 706 an optical mask. Example optical masks are optical masks 300 described herein. Method 700 further includes defining 708 an optical path. The optical path is defined by positioning light source 106 and gas cell 116 such that the optical path starts from light source 106 and traverses through optical cavity 122. In addition, method 700 includes positioning 710 the optical mask between the gas cell and the light source. Method 700 also includes positioning 712 the optical mask in the optical path by aligning the entry of the optical mask in the optical path. If optical mask 300 is conical, axis 307 of conical optical mask 300 may be aligned with normal 306 of input optic 118-i (see FIG. 3D). Method 700 further includes facing 714 the surface at an angle with the input optic. Angle 304 is unequal to zero or 90°. Optical mask 300 is configured to reduce noise from etalons caused by parallel surfaces and/or quasi-parallel surfaces in the optical path.

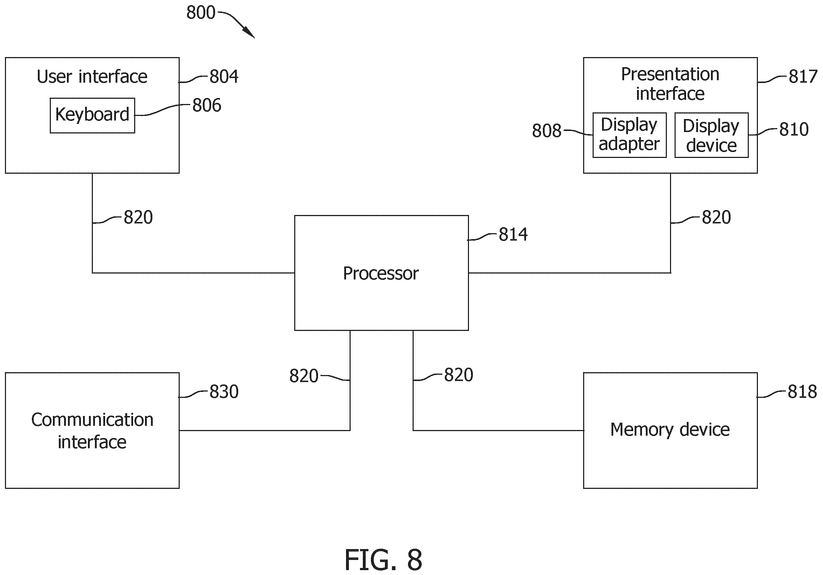

At least parts of methods described here may be implemented with any suitable computing device 800 and software implemented therein. FIG. 8 is a block diagram of an example computing device 800. In the example embodiment, computing device 800 includes a user interface 804 that receives at least one input from a user. User interface 804 may include a keyboard 806 that enables the user to input pertinent information. User interface 804 may also include, for example, a pointing device, a mouse, a stylus, a touch sensitive panel (e.g., a touch pad and a touch screen), a gyroscope, an accelerometer, a position detector, and/or an audio input interface (e.g., including a microphone).

Moreover, in the example embodiment, computing device 800 includes a presentation interface 817 that presents information, such as input events and/or validation results, to the user. Presentation interface 817 may also include a display adapter 808 that is coupled to at least one display device 810. More specifically, in the example embodiment, display device 810 may be a visual display device, such as a cathode ray tube (CRT), a liquid crystal display (LCD), a light-emitting diode (LED) display, and/or an "electronic ink" display. Alternatively, presentation interface 817 may include an audio output device (e.g., an audio adapter and/or a speaker) and/or a printer.

Computing device 800 also includes a processor 814 and a memory device 818. Processor 814 is coupled to user interface 804, presentation interface 817, and memory device 818 via a system bus 820. In the example embodiment, processor 814 communicates with the user, such as by prompting the user via presentation interface 817 and/or by receiving user inputs via user interface 804. The term "processor" refers generally to any programmable system including systems and microcontrollers, reduced instruction set computers (RISC), complex instruction set computers (CISC), application specific integrated circuits (ASIC), programmable logic circuits (PLC), and any other circuit or processor capable of executing the functions described herein. The above examples are for illustration purposes only, and thus are not intended to limit in any way the definition and/or meaning of the term "processor."

In the example embodiment, memory device 818 includes one or more devices that enable information, such as executable instructions and/or other data, to be stored and retrieved. Moreover, memory device 818 includes one or more computer readable media, such as, without limitation, dynamic random access memory (DRAM), static random access memory (SRAM), a solid state disk, and/or a hard disk. In the example embodiment, memory device 818 stores, without limitation, application source code, application object code, configuration data, additional input events, application states, assertion statements, validation results, and/or any other type of data. Computing device 800, in the example embodiment, may also include a communication interface 830 that is coupled to processor 814 via system bus 820. Moreover, communication interface 830 is communicatively coupled to data acquisition devices.

In the example embodiment, processor 814 may be programmed by encoding an operation using one or more executable instructions and providing the executable instructions in memory device 818. In the example embodiment, processor 814 is programmed to select a plurality of measurements that are received from data acquisition devices.

In operation, a computer executes computer-executable instructions embodied in one or more computer-executable components stored on one or more computer-readable media to implement aspects of the invention described and/or illustrated herein. The order of execution or performance of the operations in embodiments of the invention illustrated and described herein is not essential, unless otherwise specified. That is, the operations may be performed in any order, unless otherwise specified, and embodiments of the invention may include additional or fewer operations than those disclosed herein. For example, it is contemplated that executing or performing a particular operation before, contemporaneously with, or after another operation is within the scope of aspects of the invention.

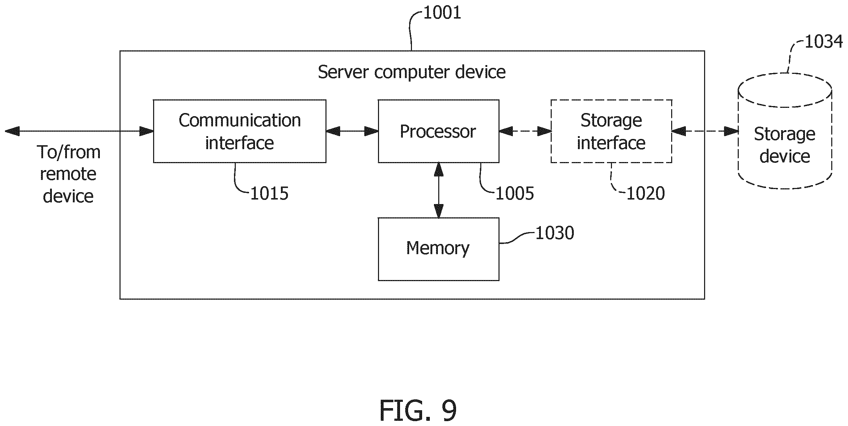

At least parts of the methods described herein may be implemented with a server computing device. FIG. 9 illustrates an example configuration of a server computer device 1001. Server computer device 1001 also includes a processor 1005 for executing instructions. Instructions may be stored in a memory area 1030, for example. Processor 1005 may include one or more processing units (e.g., in a multi-core configuration).

Processor 1005 is operatively coupled to a communication interface 1015 such that server computer device 1001 is capable of communicating with a remote device or another server computer device 1001. For example, communication interface 1015 may receive data from computing device 800, via the Internet.

Processor 1005 may also be operatively coupled to a storage device 1034. Storage device 1034 is any computer-operated hardware suitable for storing and/or retrieving data. In some embodiments, storage device 1034 is integrated in server computer device 1001. For example, server computer device 1001 may include one or more hard disk drives as storage device 1034. In other embodiments, storage device 1034 is external to server computer device 1001 and may be accessed by a plurality of server computer devices 1001. For example, storage device 1034 may include multiple storage units such as hard disks and/or solid state disks in a redundant array of independent disks (RAID) configuration, storage device 1034 may include a storage area network (SAN) and/or a network attached storage (NAS) system.

In some embodiments, processor 1005 is operatively coupled to storage device 1034 via a storage interface 1020. Storage interface 1020 is any component capable of providing processor 1005 with access to storage device 1034. Storage interface 1020 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 1005 with access to storage device 1034.

At least one technical effect of the systems and methods described herein includes (a) an optical mask configured to reduce etalons; (b) an optical mask including a surface at an angle with the input optic of the cell body; and (c) an optical mask including an absorbent coating.

Exemplary embodiments of systems and methods of measuring contaminants are described above in detail. The systems and methods are not limited to the specific embodiments described herein but, rather, components of the systems and/or operations of the methods may be utilized independently and separately from other components and/or operations described herein. Further, the described components and/or operations may also be defined in, or used in combination with, other systems, methods, and/or devices, and are not limited to practice with only the systems described herein.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A laser spectroscopy assembly (102) for gas measurement, the assembly comprising:
a gas cell (116) comprising a cell body (120), the cell body comprising an input optic (118-i);
a light source (106) configured to emit laser light (107) into the gas cell, wherein the laser light is in a wavelength range; and
an optical mask (300) positioned in an optical path of the laser light and positioned between the gas cell and the light source, the optical mask comprising:
a surface (302) forming an angle (304) with the input optic, the angle unequal to zero or 90°; and
an entry (308) defined in the surface and sized to admit the laser light therethrough,
wherein the entry is positioned in the optical path, and the optical mask is configured to reduce noise from etalons caused by parallel surfaces and/or quasi-parallel surfaces in the optical path.

2. The laser spectroscopy assembly of claim 1, wherein the optical mask further comprises an absorbent coating (316) positioned on a side (301) of the surface facing the input optic, and the absorbent coating has a reflectance of 50% or less in the wavelength range.

3. The laser spectroscopy assembly of claim 1 or 2, wherein the absorbent coating has the reflectance of 1% or less in the wavelength range.

4. The laser spectroscopy assembly of any one of claims 1 to 3, wherein the angle is selected such that the laser light reflected by the input optic is reflected away by the surface and does not intersect the input optic.

5. The laser spectroscopy assembly of any one of claims 1 to 4, wherein the surface is fabricated with a material having a reflectance of 50% or less in the wavelength range.

6. The laser spectroscopy assembly of any one of claims 1 to 5, wherein a multiplication of the angle is unequal to 90°.

7. The laser spectroscopy assembly of any one of claims 1 to 6, wherein an interior side (301) of the surface faces the input optic.

8. The laser spectroscopy assembly of any one of claims 1 to 6, wherein an exterior side (303) of the surface faces the input optic.

9. The laser spectroscopy assembly of any one of claims 1 to 8, wherein the surface is a conical surface.

10. The laser spectroscopy assembly of any one of claims 1 to 8, wherein the surface is pyramidal.

11. The laser spectroscopy assembly of any one of claims 1 to 10, wherein the optical mask defines an aperture as the entry.

12. A method (700) of assembling a laser spectroscopy assembly (102) for gas measurement, comprising:
providing (702) a gas cell (116), wherein the gas cell includes a cell body (120), the cell body including an input optic (118-i);
providing (704) a light source (106) configured to emit laser light (107) in a wavelength range;
providing (706) an optical mask (300), wherein the optical mask includes:
a surface (302); and
an entry (308) defined in the surface and sized to admit the laser light therethrough;
defining (708) an optical path along which the laser light travels by:
positioning the light source and the gas cell such that the optical path starts from the light source and traverses through the gas cell;
positioning (710) the optical mask between the gas cell and the light source;
positioning (712) the optical mask in the optical path by:
aligning the entry in the optical path; and
facing (714) the surface at an angle (304) with the input optic, the angle unequal to zero or 90°,
wherein the optical mask is configured to reduce noise from etalons caused by parallel surfaces and/or quasi-parallel surfaces in the optical path.

13. The method of claim 12, wherein the method further comprises:
simulating the laser light traveling through the laser spectroscopy assembly as a function of the angle; and
selecting the angle such that the laser light reflected by the input optic is reflected away by the surface and does not intersect the input optic.

14. The method of claim 12 or 13, wherein the method further comprises:
selecting an absorbent coating (316) such that a reflectance of the absorbent coating in the wavelength range is in a predetermined range; and
coupling the absorbent coating on a side (301) of the surface facing the input optic.
